**Europäisches Patentamt**

**European Patent Office**

**Office européen des brevets**

(19)

(11) Publication number: **0 017 446**
**B1**

(12)                         **EUROPEAN PATENT SPECIFICATION**

(45) Date of publication of patent specification: **20.07.83**

(21) Application number: **80300986.9**

(22) Date of filing: **28.03.80**

(51) Int. Cl.³: **G 01 K 11/24,**
**G 01 K 13/02**

(54) **Fluidic temperature sensor and its use.**

(30) Priority: **30.03.79 US 25530**

(43) Date of publication of application:
**15.10.80 Bulletin 80/21**

(45) Publication of the grant of the patent:
**20.07.83 Bulletin 83/29**

(84) Designated Contracting States:
**DE FR GB IT SE**

(56) References cited:
**DE - A - 1 947 073**
**US - A - 3 491 797**
**US - A - 3 783 309**
**US - A - 4 046 008**

(73) Proprietor: **THE GARRETT CORPORATION**
**9851-9951 Sepulveda Boulevard P.O. Box 92248**
**Los Angeles, California 90009 (US)**

(72) Inventor: **McCarty, Robert S.**
**3718 No. 48th Place**
**Phoenix Arizona (US)**
Inventor: **Sutton, Trevor G.**
**5616 So. Pirates Cove**
**Tempe Arizona (US)**

(74) Representative: **Taylor, Duncan Alistair et al,**
**KILBURN & STRODE 30 John Street**
**London WC1N 2DD (GB)**

Courier Press, Leamington Spa, England.

Fluidic temperature sensor and its use

This invention relates to temperature sensors, and particularly but not exclusively to sensors and their use for sensing the turbine inlet temperatures in gas turbine engines. It is desirable to have a signal representative of turbine inlet temperature so that the fuel control system can supply the right quantity of fuel to keep the turbine inlet temperature at the maximum permissible, and thereby obtain the best performance from the engine. Such sensors may be required to operate at temperatures as high as 1100°C.

Previously-proposed sensors for this purpose have used thermoelectric devices which either are limited in life by the relatively low operating temperature capability of the materials because of oxidation and corrosion problems in hot gas atmospheres or are extremely costly due to the use of noble elements in their construction. Also, these previously-proposed sensors measure temperature at what is virtually a point, rather than over a greater area, so that the measured temperature may not be truly representative of the gas stream.

According to the present invention, a temperature sensor includes a fluidic oscillator whose oscillation depends on the propagation of pressure waves through a space, the space being constructed to maintain the fluid therein at a temperature closely representative of the temperature to be sensed, whereby the propagation time of a pressure wave through the space and hence the frequency of the oscillator is dependent on the temperature to be sensed, and is characterised by fluidic isolating means coupled to the oscillator output and providing for a load a frequency signal equal to the oscillator frequency, the isolating means acting to protect the oscillator from impedance variations downstream of the isolating means. In a preferred embodiment, the fluidic oscillator comprises a fluidic bistable amplifier having a jet nozzle, a pair of opposed control ports for deflecting the jet produced by the nozzle, and a plurality of outlet ports for receiving the jet, the control ports being interconnected by a passage, switching of the jet from one outlet port to another to produce the oscillation being effected by a pressure wave propagating through the passage from one control port to the other. The passage may be constituted by a tube exposed externally to a fluid, such as the combustion gases supplied to the turbine of a gas turbine engine, whose temperature is to be measured. Such a construction provides measurement of the gas temperature over an extended area, and may allow the use of noble metals to be avoided, as described in U.S. Patent Specification No. 3570514. In that specification the fluidic frequency signals from the oscillator are converted to proportional pressure signals for transmittal to a remote location.

The present invention, on the other hand, includes buffering means, such as a fluidic buffer amplifier, for receiving the output signals from the oscillator and providing output signals at the same frequency as the oscillator; preferably, the buffering means is situated close to the fluidic oscillator. Such an arrangement allows the fluidic frequency signals to be transmitted to a remote location, without the impedance variations which may occur in long connecting conduits affecting the oscillator; this may be important because of the sensitivity of fluidic oscillators to impedance variations.

Where the fuel control system of the gas turbine engine is electronic in operation, an electrical signal representative of temperature will be required, and this can be provided by a transducer receiving the output signals from the fluidic oscillator.

With the buffer amplifier close to the fluidic oscillator, the transducer can then without difficulty be positioned remote from the fluidic oscillator, and receive the fluidic frequency signals from the buffer amplifier.

Description of the preferred embodiment

Figure 1 is a schematic block diagram of a fluidic temperature sensor embodying the present invention;

Figure 2 is a schematic structural view of a fluidic bistable amplifier used in the sensor of Figure 1; and

Figure 3 is a graphical representation of a typical frequency versus temperature characteristic for a sensor of the type shown in Figure 1.

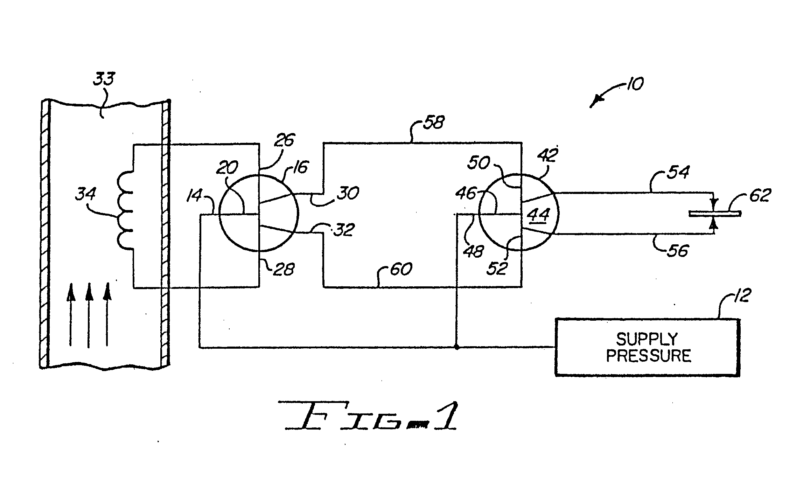

Referring first to Figure 1, the temperature sensor embodying the invention is indicated by the reference numeral 10, and is arranged to sense the temperature of a fluid flowing in a conduit 33. In essence, the temperature sensor comprises a first fluidic bistable amplifier 16, which is connected in a self-oscillating configuration, to oscillate at a frequency which is dependent on the temperature of the fluid in the conduit 33. The output signals from the amplifier 16 are amplified by a fluidic buffer amplifier 42, and the resulting amplified signals are converted into electrical signals by a piezoelectric ceramic transducer 62. These electrical signals constitute the output of the sensor and can be used, for example, for instrumentation or for control purposes.

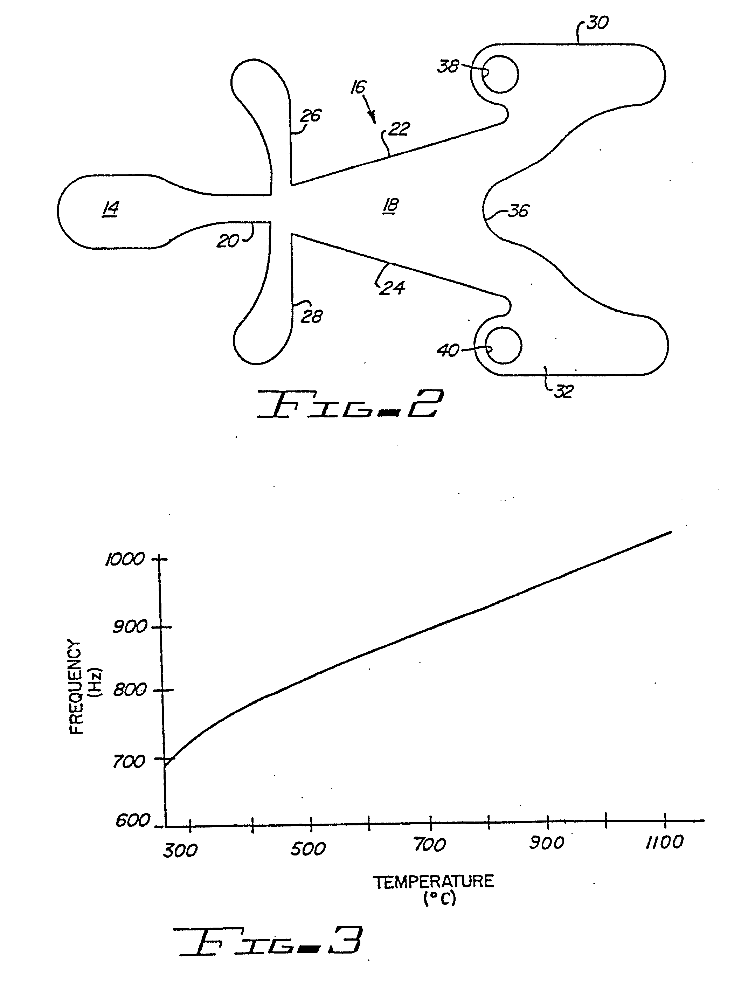

The fluidic amplifiers 16 and 42 have pressure supply ports 14 and 48, respectively, which are supplied with pressurised fluid, such as air, from a supply 12, which will in many cases by a compressor. The supply port 14 leads the gas to a jet-forming nozzle 20, which directs a jet of gas into an interaction chamber 18 (see Figure 2). The interaction chamber 18 has side walls 22 and 24; in operation, the jet from the nozzle 20 will tend to attach itself to one of the side walls 22 and 24. Adjacent the nozzle 20, control ports 26 and 28 open into the interaction chamber 18, through the side walls 22 and 24 respectively. These control ports are interconnected by a tube 34 which is situated in the conduit 33; the tube 34 acts as a heat exchanger; the configuration of the tube 34 provides a large surface area for the transfer of heat from the fluid in the conduit 33 to the fluid inside the tube 34, so that the temperature of the latter fluid is closely representative of the temperature of the fluid in the conduit 33, but without any actual communication between the two fluids.

If, for example, the jet from the nozzle 20 attaches itself to the side wall 22, the jet will tend to aspirate fluid from the control port 26 formed in that side wall. Thus, from the time when this attachment occurs, a low pressure wave is transmitted from the control port 26 into the tube 34. This wave propagates through the tube 34; when the wave reaches the control port 28, it acts on the main jet from the nozzle 20, to pull the main jet towards the side wall 24. The transient energy of the low pressure wave is sufficient to overcome the force holding the main jet to the side wall 22, so that the jet now switches over and attaches itself to the side wall 24. The sequence of events described above now repeats itself, but with the low pressure wave travelling in the opposite direction through the tube 34. Thus, the jet from the nozzle 20 will oscillate between the two side walls 22 and 24. The delay time between successive switchings of the jet is determined by the length of the tube 34 and by the speed of sound prevailing in the fluid in this tube; this speed is dependent on the temperature of the fluid, and hence on the temperature of the fluid flowing in the conduit 33. The delay time determines the frequency of oscillation; assuming that the fluidic amplifier 16 operates with a gas, this frequency is given by the formula:

$$f=\frac{\sqrt{T\gamma gR}}{2L}$$

where
f=the frequency of oscillation,
T=the absolute gas temperature,
L=the length of the feedback passage,
$\gamma$=ratio of specific heats of the gas,
g=gravitational constant,
R=characteristic gas constant.
Since $\gamma$, g, R and L are constants, the frequency of oscillation is uniquely related to the square root of the temperature of the gas within the tube 34.

The downstream part of the interaction chamber 18 has outlet passages 30 and 32, which receive the main jet alternately, depending on whether the jet is attached to the side wall 22 or to the side wall 24. The outlets 30 and 32 are separated by a blunt splitter 36; each outlet passage has a vortex vent 38 or 40, which prevent reflected waves from the outlets from influencing conditions in the interaction chamber 18, where such influence might interfere with the basic switching function of the main jet and cause unsteady oscillation. The outlets from the amplifier 16 are connected by conduits 58 and 60 to control ports 50 and 52 of the buffer amplifier 42; the amplifier 42 also has an interaction chamber 44, into which the fluid supplied by the supply port 48 is directed as a jet by a nozzle 46, and which has in its downstream portion two outlets, which are connected to the transducer 62 by conduits 54 and 56. Thus, the jet from the nozzle 46 will be deflected towards one or other of the outlets by the signals applied to the control ports 50 and 52. The function of the buffer amplifier 42 is to isolate the bistable amplifier 16 from the effects of load impedance variations in the transducer 62 or in the conduits 54 and 56 and to amplify the signals from the amplifier 16. The pulsating signal from the buffer amplifier 42 is applied to the piezoelectric transducer 62, which converts the signal to an electrical frequency proportional to the square root of the gas temperature being sensed. This electrical frequency is delivered from the transducer 62 for either instrumentation or control purposes.

## Claims

1. A temperature sensor, including a fluidic oscillator (16) whose oscillation depends on the propagation of pressure waves through a space (34), the space (34) being constructed to maintain the fluid therein at a temperature closely representative of the temperature to be sensed, whereby the propagation time of a pressure wave through the space (34) and hence the frequency of the oscillator (16) is dependent on the temperature to be sensed, characterised by fluidic isolating means (42) coupled to the oscillator output and providing for a load a frequency signal equal to the oscillator frequency, the isolating means acting to protect the oscillator from impedance variations downstream of the isolating means.

2. A temperature sensor as claimed in Claim 1 in which the isolating means comprise a fluidic bistable buffer amplifier (42) for amplifying the output signals from the oscillator (16).

3. A temperature sensor as claimed in Claim 1 or Claim 2 in which the frequency signals from the isolating means are converted by a transducer (62) into electrical signals of the same frequency.

4. A temperature sensor as claimed in Claim 3 when dependent from Claim 2 in which the buffer amplifier (42) is situated close to the fluidic oscillator (16) while the transducer (62) is situated remote from the oscillator (16) and buffer amplifier (42).

5. A temperature sensor as claimed in any of the preceding claims in which the fluidic oscillator comprises a fluidic bistable amplifier (16) having a jet nozzle (20), a pair of opposed control ports (26, 28) for deflecting the jet produced by the nozzle, and a plurality of outlet ports (30, 32) for receiving the jet, the control ports (26, 28) being connected to inlet means, switching of the jet from one outlet port (30, 32) to another to produce the oscillation being effected by a pressure wave propagating along the inlet means from one control port to the other.

6. A temperature sensor as claimed in any of Claims 2, 3 when dependent from Claim 2 or 4, in which the buffer amplifier comprises a fluidic bistable amplifier (42) having a jet nozzle (46), a pair of opposed control ports (50, 52) for deflecting the jet produced by the nozzle, and a plurality of outlet ports for receiving the jet, the control ports being connected to inlet means, switching of the jet from one outlet port to another to produce the oscillation being effected by a pressure wave propagating along the inlet means from one control port to the other.

7. A temperature sensor as claimed in Claim 5 in which the inlet means comprises a tube (34) exposed externally to a fluid whose temperature is to be sensed.

8. A temperature sensor as claimed in Claim 7 in which there is no fluid communication between a fluid in the tube (34) and the fluid whose temperature is to be sensed.

9. A temperature sensor as claimed in any of Claims 5—8 in which the fluidic bistable amplifier operates on a supply of pressurised gas such as compressed air.

10. A use of a temperature sensor as claimed in any of the preceding claims to measure the temperature of combustion gases supplied to the turbine of a gas turbine engine.

**Patentansprüche**

1. Temperaturfühler mit einem Fluidik-Oszillator (16), dessen Oszillation von dem Fortschreiten von Druckwellen durch einen Raum (34) abhängt, welcher so ausgelegt ist, daß das darin befindliche Fluid auf einer Temperatur gehalten wird, die der abzufühlenden Temperatur weitgehend entspricht, wobei die Fortschreitdauer einer Druckwelle durch den Raum (34) und damit die Frequenz des Oszillators (16) von der abzufühlenden Temperatur abhängt, gekennzeichnet durch eine Fluidik-Isoliervorrichtung (42), die mit dem Oszillatorausgang gekoppelt ist, und das für eine Last ein Frequenzsignal gleich der Oszillatorfrequenz darstellt, wobei die Isoliervorrichtung in der Weise wirkt, daß sie den Oszillator gegen Impedanzänderungen stromabwärts in bezug auf die Isoliervorrichtung schützt.

2. Temperatursensor nach Anspruch 1, dadurch gekennzeichnet, daß die Isoliervorrichtung einen bistabilen Fluidik-Pufferspeicher (42) zur Verstärkung der Ausgangssignale aus dem Oszillator (16) aufweist.

3. Temperatursensor nach Anspruch 1 oder 2, dadurch gekennzeichnet, daß die Frequenzsignale aus der Isoliervorrichtung durch einen Wandler (62) in elektrische Signale gleicher Frequenz umgewandelt werden.

4. Temperatursensor nach Anspruch 3, wenn abhängig von Anspruch 2, dadurch gekennzeichnet, daß der Pufferverstärker (42) nahe dem Fluidik-Oszillator (16) angeordnet ist, während der Wandler (62) entfernt von dem Oszillator (16) und dem Pufferverstärker (42) angeordnet ist.

5. Temperatursensor nach Ansprüchen 1—4, dadurch gekennzeichnet, daß der Fluidik-Oszillator einen bistabilen Fluidikverstärker (16) mit einer Strahldüse (20), zwei gegenüberliegenden Steueröffnungen (26, 28) zum Ablenken des von der Düse erzeugten Strahles, und eine Vielzahl von Auslaßöffnungen (30, 32) zur Aufnahme des Strahles aufweist, wobei die Steueröffnungen (26, 28) mit der Einlaßvorrichtung verbunden sind, und wobei eine Umschaltung des Strahles von einer Auslaßöffnung (30, 32) zu einer anderen zur Erzeugung der Oszillation durch eine Druckwelle erzielt wird, die längs der Einlaßvorrichtung von einer Steueröffnung zu der anderen fortschreitet.

6. Temperatursensor nach einem der Ansprüche 2, 3, abhängig von Anspruch 2 oder 4, dadurch gekennzeichnet, daß der Pufferverstärker einen bistabilen Fluidik-Verstärker (42) mit einer Strahldüse (46), zwei entgegengesetzt angeordnete Steueröffnungen (50, 52) zur Ablenkung des von der Düse erzeugten Strahles, und eine Vielzahl von Auslaßöffnungen zur Aufnahme des Strahles aufweist, wobei die Steueröffnung mit der Einlaßvorrichtung verbunden sind, und wobei das Umschalten des Strahles von der Auslaßöffnung zu einer anderen zur Erzeugung der Oszillation durch eine Druckwelle erzielt wird, die längs der Einlaßvorrichtung von einer Steueröffnung zur anderen fortschreitet.

7. Temperatursensor nach Anspruch 5, dadurch gekennzeichnet, daß die Einlaßvorrichtung ein Rohr (34) aufweist, das außen einem Fluid ausgesetzt ist, dessen Temperatur abgefühlt werden soll.

8. Temperatursensor nach Anspruch 7, dadurch gekennzeichnet, daß keine Fluidikverbindung zwischen einem Fluid im Rohr (34) und dem Fluid, dessen Temperatur abgefühlt werden soll, besteht.

9. Temperatursensor nach einem der Ansprüche 5—8, dadurch gekennzeichnet, daß der bistabile Fluidik-Verstärker aufgrund der Einspeisung von Druckgas, z.B. komprimierter Luft, arbeitet.

10. Verwendung eines Temperatursensors nach einem der vorausgehenden Ansprüche 1—9, zur Messung der Temperatur von Verbrennungsgasen, die der Turbine eines Gasturbinenmotors zugeführt werden.

## Revendications

1. Un capteur de température, comportant un oscillateur fluidique (16) dont l'oscillation dépend de la propagation d'ondes de pression à travers un espace (34), l'espace (34) étant agencé pour maintenir le fluide à l'intérieur à une température étroitement représentative de la température à détecter, grâce à quoi le temps de propagation d'une onde de pression à travers l'espace (34) et par conséquent la fréquence de l'oscillateur (16) dépendent de la température à détecter, caractérisé par des moyens d'isolement fluidiques (42) couplés à la sortie de l'oscillateur et fournissant pour une charge un signal de fréquence égal à la fréquence de l'oscillateur, les moyens d'isolement agissant pour protéger l'oscillateur de variations d'impédance en aval des moyens d'isolement.

2. Un capteur de température comme revendiqué dans la revendication 1, dans lequel les moyens d'isolement comportent un amplificateur fluidique bistable intermédiaire (42) pour amplifier les signaux de sortie de l'oscillateur (16).

3. Un capteur de température comme revendiqué dans la revendication 1 ou la revendication 2, dans lequel les signaux de fréquence provenant des moyens d'isolement sont convertis, par un transducteur (62), en signaux électriques de la même fréquence.

4. Un capteur de température comme revendiqué dans la revendication 3 lorsqu'elle dépend de la revendication 2, dans lequel l'amplificateur intermédiaire (42) est situé près de l'oscillateur fluidique (16) tandis que le transducteur (62) est situé loin de l'oscillateur (16) et de l'amplificateur intermédiaire (42).

5. Un capteur de température comme revendiqué dans l'une quelconque des revendications précédentes, dans lequel l'oscillateur fluidique comporte un amplificateur fluidique bistable (16) comprenant un ajutage à jet (20), une paire d'orifices de commande opposés (26, 28) pour dévier le jet produit par l'ajutage, et une pluralité d'orifices de sortie (30, 32) pour recevoir le jet, les orifices de commande (26, 28) étant reliés à des moyens d'entrée, la commutation du jet d'un orifice de sortie (30, 32) à un autre pour produire l'oscillation étant effectuée par une onde de pression se propageant le long des moyens d'entrée d'un orifice de commande à l'autre.

6. Un capteur de température comme revendiqué dans l'une quelconque des revendications 2, 3 lorsqu'elle dépend de la revendication 2, ou 4, dans lequel l'amplificateur intermédiaire comporte un amplificateur fluidique bistable (42) comportant un ajutage à jet (46), une paire d'orifices de commande opposés (50, 52) pour dévier le jet produit par l'ajutage, et une pluralité d'orifices de sortie pour recevoir le jet, les orifices de commande étant reliés à des moyens d'entrée, la commutation du jet d'un orifice de sortie à un autre pour produire l'oscillation étant effectuée par une onde de pression se propageant le long des moyens d'entrée d'un orifice de commande à l'autre.

7. Un capteur de température comme revendiqué dans la revendication 5, dans lequel les moyens d'entrée comportent un tube (34) exposé extérieurement à un fluide dont la température doit être détectée.

8. Un capteur de température comme revendiqué dans la revendication 7, dans lequel il n'y a pas de communication de fluide entre un fluide dans le tube (34) et le fluide dont la température doit être détectée.

9. Un capteur de température comme revendiqué dans l'une quelconque des revendications 5—8, dans lequel l'amplificateur fluidique bistable fonctionne sur une alimentation de gaz sous pression, par exemple de l'air comprimé.

10. Une utilisation d'un capteur de température comme revendiqué dans l'une quelconque des revendications précédentes pour mesurer la température de gaz de combustion fournis à la turbine d'une turbine à gaz.

FIG-1

SUPPLY
PRESSURE

0017446

FIG-2

FIG-3